# EUROPÄISCHE PATENTSCHRIFT

(11) **EP 2 868 182 B1**
(45) Veröffentlichungstag und Bekanntmachung des Hinweises auf die Patenterteilung: **09.05.2018**
(21) Anmeldenummer: 14003621.1
(22) Anmeldetag: 24.10.2014
(51) Int. Cl.: A01C 15/00, A01C 17/00

(54) **Verteilmaschine mit einem Behälter und einer diesem zugeordneten, schwenkbaren Abdeckung**
Spreader machine with a container and a pivoting cover associated to this container
Épandeur doté d'une cuve et d'un couvercle pivotant associée à cette dernière

(30) Priorität: 04.11.2013 DE 202013009703 U
(43) Veröffentlichungstag der Anmeldung: 06.05.2015
(73) Patentinhaber: RAUCH Landmaschinenfabrik GmbH, 76547 Sinzheim (DE)
(72) Erfinder: Gushurst, Hans, 76547 Sinzheim (DE); Seiler, Ralph, 77815 Bühl-Oberbruch (DE); Doll, Franz, 76547 Sinzheim (DE); Stöcklin, Volker, M. Sc., 77975 Ringsheim (DE)
(74) Vertreter: Lichti - Patentanwälte Partnerschaft mbB

(56) Entgegenhaltungen:
- EP-A1- 1 645 177
- EP-A1- 2 014 147
- DE-A1- 19 949 712
- GB-A- 2 410 473

## Beschreibung

Die Erfindung betrifft eine Verteilmaschine, insbesondere Streu- und/oder Sämaschine, mit wenigstens einem von einem Tragrahmen getragenen Behälter zur Aufnahme von pulver- und/oder partikelförmigem Gut, wenigstens einer am Boden des Behälters angeordneten Auslauföffnung, einem der Auslauföffnung nachgeordneten Dosierorgan sowie wenigstens einem dem Dosierorgan nachgeordneten Verteilorgan zum Verteilen des pulver- und/oder partikelförmigen Gutes auf dem Boden, wobei der Behälter eine um wenigstens eine Schwenkachse auf- und zu klappbare, von einer an dem Behälter oder an dessen Tragrahmen festgelegten Antriebseinheit betätigte Abdeckung aufweist, welche in ihrer zugeklappten Stellung den Öffnungsquerschnitt des Behälters abdeckt und in ihrer aufgeklappten Stellung zumindest einen Teil des Öffnungsquerschnittes des Behälters freigibt.

Verteilmaschinen sind einerseits in Form von landwirtschaftlichen Streumaschinen zum Ausbringen von pulver- oder partikelförmigen Gut, wie insbesondere Dünger oder Saatgut, in vielfältiger Ausgestaltung bekannt, so beispielsweise in gezogener oder von einem Dreipunkt einer Zugmaschine, wie eines Traktors, aufgenommener Bauart. Derartige Verteilmaschinen umfassen einen das zu verteilende Gut aufnehmenden Behälter, an dessen Boden üblicherweise eine oder zwei Auslauföffnungen angeordnet sind, wobei der jeweiligen Auslauföffnung ein Dosierorgan zugeordnet ist, um das auszubringende Gut in der gewünschten Menge - oder genauer: mit dem gewünschten Massenstrom - dem Behälter zu entnehmen. Das Dosierorgan weist üblicherweise einen Dosierschieber auf, welcher mittels eines geeigneten Stellorgans auf- und zusteuerbar ist, um je nach gewünschter Verteilungsbreite des auszubringenden Gutes auf dem Boden, je nach Fahrgeschwindigkeit und je nach den physikalischen Eigenschaften des Gutes, wie beispielsweise dessen Rieselfähigkeit, den gewünschten Massenstrom einstellen zu können. Alternativ kann das Dosierorgan zu demselben Zweck z.B. auch eine steuerbar drehangetriebenes Nockenwalze umfassen. Stromab des Dosierorgans befinden sich ein oder mehrere Verteilorgane, insbesondere in Form von mit Wurfschaufeln bestückten Verteilerscheiben, mittels welchen das pulver- oder partikelförmige Gut über die gewünschte Arbeitsbreite verteilt wird. Eine derartige landwirtschaftliche Verteilmaschine in Form eines Düngerstreuers ist beispielsweise aus der DE 10 2007 053 550 A1 bekannt.

Im Falle von Winterdienststreumaschinen dient der Behälter vornehmlich zur Aufnahme von in der Regel granulatförmigem Splitt und/oder Streusalz, wobei die Funktion einer solchen Winterdienststreumaschine weitestgehend der einer oben beschriebenen landwirtschaftlichen Streumaschine entspricht.

Darüber hinaus kommen derartige Verteilmaschinen in Form von landwirtschaftlichen Sä- oder Drillmaschinen zum Einsatz. Auch hier wird das in dem Behälter auf Vorrat gehaltene Gut mittels eines üblicherweise unterhalb einer Auslauföffnung des Behälters angeordneten Dosierorgan dosiert und wird der dosierte Massenstrom an Streugut an eine dem Dosierorgan nachgeordnete, z.B. mittels eines Gebläses mit Druckluft beaufschlagte Förderleitung übergeben, welche den in den Druckluftstrom eindispergierten, dosierten Streugutstrom einem Verteilerkopf aufgibt. Der Verteilerkopf umfasst eine Mehrzahl an Abgängen, an welche sich je eine Verteilerleitung anschließt, welche dazu dient, den Streugutstrom in der Anzahl an Verteilerleitungen entsprechenden Teilströmen je einem Verteilorgan, z.B. in Form von Säscharen (sofern es sich bei dem Streugut insbesondere um Saatgut handelt), Prallplatten (sofern es sich bei dem Streugut insbesondere um Dünger handelt) oder dergleichen, zuzuführen, welche mit unterschiedlichem Seitenabstand von der Verteilmaschine angeordnet sind. Derartige Verteilmaschinen sind beispielsweise aus den DE 44 34 963 A1 oder DE 197 47 029 A1 bekannt.

Das zu verteilende Gut, welches in Pulver- oder Partikelform vorliegt, neigt im Falle eines Feuchtigkeitszutrittes in aller Regel zum Zusammenbacken oder Verklumpen, was eine einwandfreie Dosierung und Verteilung zumindest erschwert oder gar verhindert. In diesem Zusammenhang sei erwähnt, dass die meisten festen Düngemittel wie auch Streusalz einen hygroskopischen Charakter besitzen, so dass sie in Verbindung mit Luftfeuchtigkeit oder gar Regen bzw. Schnee(matsch), welche in den Behälter eindringen, agglomerieren und mit fortschreitender Feuchtigkeitsaufnahme zunehmend in mehr oder minder harten Agglomeraten den Behälterwandungen und den Dosierorganen anhaften, so dass deren Funktion beeinträchtigt wird und die vorgegebene Ausbringmenge nicht mehr eingehalten werden kann. Im Falle von Saatgut kommt hinzu, dass es bei Feuchtigkeitszutritt geschädigt und/oder es zu einer vorzeitigen Keimung eines Teils des Saatgutes kommen kann, welches besonders viel Feuchtigkeit aufgenommen hat. Schließlich sollte es auch unbedingt verhindert werden, dass mehr oder minder gesundheitlich bedenkliche und/oder für das Pflanzenwachstum schädliche Stoffe, wie Schmiermittel, Spritzwasser von der Straße etc., in das in dem Behälter auf Vorrat gehaltene Streu- oder Saatgut eingetragen werden.

Aus den vorgenannten Aspekten ergibt sich die Notwendigkeit, den Behälter zumindest während der Streu- oder Säarbeit sowie während der Zufahrt zur Streu- oder Säarbeit jedenfalls dann abzudecken, wenn Niederschläge drohen oder wenn der Boden aufgrund von Niederschlagsresten noch feucht ist, so dass kein Regen- oder Spritzwasser in den Behälter gelangen kann. Hierzu bedient man sich entweder geeigneter Planen, welche manuell über den Öffnungsquerschnitt des Behälters gespannt werden, was jedoch in handhabungstechnischer Hinsicht mühsam und aufwändig ist und zudem die Gefahr birgt, dass die Plane aufgrund von (Fahrt)wind teilweise gelöst wird mit der Folge, dass Feuchtigkeit zumindest partiell in den Behälter eindringen kann.

Darüber hinaus sind Verteilmaschinen bekannt, deren Behälter eine um eine Schwenkachse auf- und zu klappbare Abdeckung aufweist, welche in ihrer zugeklappten Stellung den Öffnungsquerschnitt des Behälters abdeckt und in ihrer aufgeklappten Stellung zumindest einen Teil des Öffnungsquerschnittes des Behälters freigibt. Die Abdeckung weist üblicherweise ein um die Schwenkachse klappbares Traggestänge auf, an welchem die eigentliche, flächige Abdeckung, z.B. in Form von formstabilen oder insbesondere nachgiebigen, flexiblen Abdeckplatten bzw. -planen, befestigt ist. Bei gegenwärtig auf dem Markt befindlichen Verteilmaschinen, welche mit einer solchen Abdeckung ausgestattet sind, erfolgt die Betätigung zum Auf- und Zuklappen derselben in der Regel manuell mittels einer Handhabe, was jedoch recht mühsam und kraftaufwändig ist und zudem die Gefahr eines Einklemmens von Gliedmaßen des Benutzers bergen kann, welcher zudem dafür Sorge zu tragen hat, dass die Abdeckung im geschlossenen Zustand hinreichend arretiert worden ist, damit ein Eindringen von Feuchtigkeit ausgeschlossen werden kann, nachdem der Behälter mit dem jeweiligen Streugut befüllt worden ist. Dabei ist es dem Benutzer insbesondere dann, wenn sich auf der Abdeckung infolge Niederschlag bereits Pfützen gebildet haben, oder gar unter Schneelast um so schwerer möglich, die Abdeckung manuell zu betätigen. Dies gilt im Besonderen, wenn auch nicht ausschließlich, im Falle von relativ großen Behältern, welche beispielsweise im Falle von gezogenen, achsgestützten Streuern ein Fassungsvermögen von mehr als 8000 1 besitzen können.

Von dem Hersteller *AMAZONEN-WERKE H. DREYER GmbH* & *Co. KG* sind unter den Handelsnamen "ZA-M" bzw. "ZA-TS" ferner Verteilmaschinen in Form von Düngerstreuern bekannt, deren klappbare Abdeckung mittels hydraulischer Hubzylinder motorisch betätigbar sind, wobei der Hubzylinder ein an dem Behälter gelagertes Zahnrad antreibt, welches an der Schwenkachse der Abdeckung gelagert und mit einem schwenkbaren Träger derselben wirkverbunden ist. Nachteilig ist einerseits die nur schwerliche Nachrüstung manuell betätigbarer Abdeckungen mit einem solchen System, welches überdies zur hydraulischen Kontaktierung des Hubzylinders Hydraulikleitungen erfordert, welche entweder mit dem Hydrauliksystem einer Zugmaschine, wie eines Traktors, verbunden oder über einen separaten Ventilblock angesteuert werden müssen. Überdies sind derartige Hydraulikzylinder verhältnismäßig teuer und wartungsintensiv und bergen zudem die Gefahr einer Kontamination des in dem Behälter aufgenommenen Streugutes durch austretendes Hydrauliköl, was es jedenfalls zu verhindern gilt.

Eine landwirtschaftliche Verteilmaschine mit einem ähnlichen Antrieb einer Abdeckung ihres Vorratsbehälters ist aus der EP 1 645 177 A1 bzw. aus der hierfür prioritätsgebenden DE 10 2004 048 622 A1 bekannt. Die um eine Schwenkachse auf- und zu klappbare Abdeckung des Behälters weist ein scherenartiges Gestänge auf, welches mittels eines motorischen Stellelementes in Form eines doppelwirkenden Hydraulikzylinders betätigt ist.

Die DE 199 49 712 A1 beschreibt eine Verteilmaschine mit einem mit einer Abdeckung ausgestatteten Vorratsbehälter, wobei die Abdeckung entlang einer parallel zur Oberseite des Behälters verlaufenden Schwenkachse auf und zu klappbar ist. Zur elektrischen Betätigung der Abdeckung ist ein elektromotorisches Antriebselement in Form eines Elektrozylinders vorgesehen. Nachteilig ist einerseits die relativ hohe Störanfälligkeit derartiger elektromotorischer Antriebselemente, insbesondere unter Einwirkung von Staubund Streugutpartikeln sowie Feuchtigkeit oder auch im Falle schwerer Lasten, wie beispielsweise dann, wenn die Abdeckung mit Niederschlagswasser oder Schnee bedeckt ist. Andererseits ist die Nachrüstung herkömmlicher, manuell betätigbarer Abdeckungen mit derartigen Elektrozylindern schwierig, weil auf eine exakte Anlenkung desselben einerseits an einer geeigneten Stelle des Behälters, andererseits an einem Träger der Abdeckung geachtet werden muss.

Schließlich sei in Bezug auf den Stand der Technik der Vollständigkeit halber noch auf nicht gattungsgemäße Kippmulden- und andere Baustellenfahrzeuge verwiesen, deren nach oben offene Kippmulde eine auf einer Wickelrolle aufgewickelte, motorisch ein- und ausrollbare Abdeckplane besitzt, welche an zwei parallelen Schienen an der Oberseite der Kippmulde geführt ist. Derartige Abdeckplanen sind für gattungsgemäße Verteilmaschinen nur bedingt geeignet, da sich das Streugut in den Wicklungen akkumulieren und verklumpen kann, so dass es beim Öffnen/Schließen der Abdeckplane in den Behälter hineinfällt und das "neue" Streugut mit nicht sortenreinen und zudem verunreinigten sowie oft feuchten, durch das Einklemmen zwischen den aufgerollten Lagen der Abdeckplane komprimierten und harten Streugutklumpen verunreinigt wird, was es aus den oben genannten Gründen zu vermeiden gilt.

Die GB 2 410 473 A beschreibt eine Abdeckung für die Ladefläche eines Fahrzeugs, wobei die Abdeckung einen Betätigungsantrieb mit einer pneumatischen, hydraulischen oder elektrischen Kolben-/Zylindereinheit aufweist. An der Kolbenstange dieser Einheit ist eine Zahnleiste angeordnet, welche mit einem Zahnrad im Eingriff steht. Das Zahnrad ist drehfest mit einem schwenkbaren Träger der Abdeckung verbunden, so dass der Träger bei Drehung des Zahnrades mittels der Zahnleiste gemeinsam mit diesem um die Drehachse des Zahnrades verschwenkt wird.

Der Erfindung liegt daher die Aufgabe zugrunde, die klappbare Abdeckung einer Verteilmaschine der eingangs genannten Art auf einfache und kostengünstige Weise dahingehend weiterzubilden, dass unter zumindest weitestgehender Vermeidung der vorgenannten Nachteile eine hohe Sicherheit und Robustheit des Antriebs der Abdeckung sowie insbesondere auch eine einfache Nachrüstung manuell betätigter Abdeckungen gewährleistet ist.

Erfindungsgemäß wird diese Aufgabe bei einer Verteilmaschine der eingangs genannten Art dadurch gelöst, dass die Abdeckung von einer elektromotorischen Antriebseinheit mit wenigstens einem, deren Elektromotor nachgeordneten Getriebe betätigt ist, wobei die elektromotorische Antriebseinheit eine Abtriebswelle aufweist, auf welcher drehfest ein Mitnehmer sitzt, welcher mit wenigstens einem schwenkbaren Träger der Abdeckung verbunden oder von einem solchen schwenkbaren Träger gebildet ist.

Die erfindungsgemäße Ausgestaltung gestaltet sich zunächst nicht nur als sehr einfach und kostengünstig, sondern insbesondere auch unter widrigen Umgebungsbedingungen, wie sie während der Feld- oder Streuarbeit üblicherweise herrschen, als sehr robust, zuverlässig und wartungsarm, indem sie lediglich die Drehbewegung einer Abtriebswelle der elektromotorischen Antriebseinheit zur Betätigung der klappbaren Abdeckung erfordert und ohne zusätzliche translatorische Bewegungen auskommt, wobei sie insbesondere den Einsatz von Hydraulik- oder auch Elektrozylindern entbehrlich macht, zu deren Problematik auf die obigen Ausführungen verwiesen sei. Die erfindungsgemäße elektromotorische Antriebseinheit zur Betätigung der Abdeckung lässt sich überdies sehr kompakt und platzsparend ausbilden und eignet sich in idealer Weise zur Nachrüstung von bislang nur manuell betätigbaren Abdeckungen, wobei die elektrische Kontaktierung z.B. auf einfache Weise mittels eines geeigneten Akkumulators oder, wie weiter unten noch näher ausgeführt, durch das elektrische Versorgungssystem einer Zugmaschine, wie eines Traktors oder eines Straßenfahrzeugs, erfolgen kann. Aufgrund dessen, dass dem Elektromotor der elektromotorischen Antriebseinheit wenigstens ein Getriebe nachgeordnet ist, kann ferner ein Elektromotor mit verhältnismäßig geringer Leistung zum Einsatz gelangen kann und ist ein präzises Ablegen der Abdeckung in der vorgesehenen Schließposition möglich. Zum Erreichen einer größtmöglichen Einfachheit und Kompaktheit bei einer zuverlässigen Robustheit der elektromotorischen Antriebseinheit dient dabei insbesondere deren Abtriebswelle, auf welcher drehfest der Mitnehmer sitzt, welcher mit dem wenigstens einen schwenkbaren Träger der Abdeckung verbunden oder von einem solchen schwenkbaren Träger gebildet ist. Folglich treibt die Abtriebswelle den Klappmechanismus der Abdeckung unmittelbar rotatorisch entsprechend deren Schwenkbewegung an, ohne dass weitere Kraftübertragungsmittel erforderlich sind. Dementsprechend kann es auch von Vorteil sein, wenn die elektromotorische Antriebseinheit im Bereich der Schwenkachse der Abdeckung angeordnet ist.

Die elektromotorische Antriebseinheit ist zweckmäßigerweise in wenigstens einem Gehäuse untergebracht, um die Gefahr eines Einklemmens von Gliedmaßen des Benutzers während der Betätigung der Abdeckung zuverlässig zu vermeiden. Dabei kann die elektromotorische Antriebseinheit insbesondere in einem einzigen, gemeinsamen Gehäuse untergebracht oder können der Elektromotor sowie gegebenenfalls ein oder mehrere, diesem nachgeschaltete(s) Getriebe (siehe hierzu weiter unten) in separaten Gehäusen untergebracht sein, welche an dem Gehäuse der elektromotorischen Antriebseinheit befestigt sind, um für einen allseitigen Verschluss der Komponenten der elektromotorischen Antriebseinheit zu sorgen. Das Gehäuse sollte dabei zweckmäßigerweise im Wesentlichen staub- und flüssigkeitsdicht ausgestaltet sein, um die elektromotorische Antriebseinheit vor einem Eindringen von Feuchtigkeit und Schmutz, wie insbesondere während der Streu- bzw. Säarbeit umherfliegender Streu- bzw. Saatgutpartikel, zu bewahren. Zu demselben Zweck sollte die Abtriebswelle der elektromotorischen Antriebseinheit alternativ oder vorzugsweise zusätzlich, insbesondere mittels wenigstens einer Gleitringdichtung, gegen das Gehäuse abgedichtet sein, um ein Eindringen von Feuchtigkeit und Schmutz, wie insbesondere Streugutfeinpartikeln, zu verhindern.

In vorteilhafter Ausgestaltung kann insbesondere im Hinblick auf eine einfache Nachrüstung herkömmlicher, manuell betätigbarer Abdeckungen vorgesehen sein, dass die elektromotorische Antriebseinheit an wenigstens einem, insbesondere an genau einem, Befestigungsflansch festgelegt ist, welcher an dem Behälter oder an dessen Tragrahmen befestigt ist. Zur Nachrüstung muss folglich lediglich der die elektromotorische Antriebseinheit tragende Befestigungsflansch an einer geeigneten Position an dem Behälter oder an dessen Tragrahmen befestigt, z.B. angeschraubt oder -angeschweißt, und die elektromotorische Antriebseinheit auf die oben erwähnte Weise elektrisch kontaktiert werden.

In Bezug auf das bzw. die dem Elektromotor der elektromotorischen Antriebseinheit nachgeordnete(n) Getriebe hat es sich insbesondere bewährt, wenn das oder die Getriebe ein Übersetzungsverhältnis von insgesamt wenigstens etwa 1:300, insbesondere von wenigstens etwa 1:600, vorzugsweise von wenigstens etwa 1:900, beispielsweise von wenigstens etwa 1:1200, aufweist/aufweisen.

Während das oder die Getriebe grundsätzlich nach beliebiger bekannter Bauart ausgestaltet sein können, kann es hinsichtlich einer sehr hohen Kompaktheit von Vorteil sein, dass dem Elektromotor wenigstens ein Planetengetriebe nachgeordnet ist. Das Übersetzungsverhältnis eines solchen Planetengetriebes kann beispielsweise wenigstens 1:20, vorzugsweise wenigstens 1:40, insbesondere wenigstens 1:60, betragen. Alternativ oder zusätzlich kann es aus den genannten Gründen von Vorteil sein, wenn dem Elektromotor wenigstens ein Schneckenradgetriebe nachgeordnet ist, wobei beispielsweise ein einem Planetengetriebe der vorgenannten Art nachgeordneten Schneckenradgetriebe vorgesehen sein kann, dessen Übersetzungsverhältnis beispielsweise wenigstens 1:5, vorzugsweise wenigstens 1:10, insbesondere wenigstens 1:15, beträgt. Das Schneckenradgetriebe kann hierbei z.B. ein auf der Abtriebswelle der elektromotorischen Antriebseinheit sitzendes Schneckenrad aufweisen, welches mit einer auf der Abtriebswelle des Elektromotors oder des diesem nachgeschalteten Planetengetriebes sitzenden Schneckengewindes im Eingriff steht.

Während die elektromotorische Antriebseinheit grundsätzlich auch eine eigene Stromversorgungseinrichtung, wie eine Batterie, einen Akkumulator oder dergleichen, aufweisen kann, kann - wie bereits angedeutet - gemäß einer bevorzugten Ausführung vorgesehen sein, dass die elektromotorische Antriebseinheit von der elektrischen Stromversorgung einer Zugmaschine, wie eines Traktors oder eines Straßenfahrzeugs, mit Strom versorgt ist. In diesem Fall kann die elektromotorische Antriebseinheit insbesondere eine elektrische Schnittstelle aufweisen, welche an die elektrische Stromversorgung der Zugmaschine, wie eines Traktors oder eines Straßenfahrzeugs, anschließbar ist.

Um im Falle einer Störung des Antriebs der Abdeckung oder auch für den Fall, dass eine Energiequelle des Antriebs erschöpft oder nicht verfügbar ist (die Verteilmaschine wurde z.B. von dem die Energiequelle tragenden Traktor entkoppelt und abgestellt), gleichwohl die Möglichkeit einer nicht motorischen Betätigung der Abdeckung zu bieten, kann gemäß einer vorteilhaften Weiterbildung vorgesehen sein, dass der Mitnehmer der elektromotorischen Antriebseinheit lösbar mit dem wenigstens einen schwenkbaren Träger der Abdeckung und/oder mit der elektromotorischen Antriebseinheit verbunden ist, so dass die Abdeckung nach Lösen des Mitnehmers von der Antriebseinheit und/oder von dem schwenkbaren Träger der Abdeckung manuell auf- und zu klappbar ist. Auf diese Weise lässt sich die Abdeckung auch rein manuell betätigen, indem der Mitnehmer von der Antriebseinheit und/oder von dem schwenkbaren Träger der Abdeckung gelöst wird, wobei die lösbare Verbindung zwischen dem Mitnehmer und der Antriebseinheit bzw. zwischen dem Mitnehmer und der Abdeckung grundsätzlich in einer beliebigen, als solchen bekannten Weise ausgestaltet sein kann, wie beispielsweise in Form von Schrauben, Bolzen, Klemmen, Rasten oder dergleichen. Der Vollständigkeit halber sei explizit darauf hingewiesen, dass eine derartige lösbare Verbindung zwischen wenigstens einem schwenkbaren Träger der Abdeckung und dem Mitnehmer der Antriebseinheit bzw. zwischen dem Mitnehmer und der Antriebseinheit selbst auch für andersartige Antriebe der Abdeckung als die erfindungsgemäße elektromotorische Antriebseinheit günstig sein kann, wie z.B. für herkömmliche Elektro-, Hydraulik-, Pneumatikzylinder oder dergleichen. Folglich kann es bei einer Verteilmaschine, insbesondere in Form einer Streu- und/oder Sämaschine, mit wenigstens einem von einem Tragrahmen getragenen Behälter zur Aufnahme von pulver- und/oder partikelförmigem Gut, wenigstens einer am Boden des Behälters angeordneten Auslauföffnung, einem der Auslauföffnung nachgeordneten Dosierorgan sowie einem dem Dosierorgan nachgeordneten Verteilorgan zum Verteilen des pulver- und/oder partikelförmigen Gutes auf dem Boden, wobei der Behälter eine um eine Schwenkachse auf- und zu klappbare, nicht notwendigerweise elektrisch, sondern in beliebiger Weise motorisch (einschließlich aktuatorisch) betätigte Abdeckung aufweist, welche in ihrer zugeklappten Stellung den Öffnungsquerschnitt des Behälters abdeckt und in ihrer aufgeklappten Stellung zumindest einen Teil des Öffnungsquerschnittes des Behälters freigibt, von Vorteil sein, wenn ein Mitnehmer einer (beliebigen) Antriebseinheit der Abdeckung lösbar mit wenigstens einem schwenkbaren Träger der Abdeckung und/oder mit der (beliebigen) Antriebseinheit verbunden ist, so dass die Abdeckung Lösen des Mitnehmers von der Antriebseinheit und/oder von dem schwenkbaren Träger der Abdeckung manuell auf- und zu klappbar ist.

In vorteilhafter Weiterbildung der erfindungsgemäßen Verteilmaschine kann zur Ansteuerung der elektromotorischen Antriebseinheit ferner vorgesehen sein, dass letzterer eine Steuereinrichtung zugeordnet ist, welche insbesondere wenigstens eine Steuerplatine umfasst. Die Steuerplatine kann dabei in dem Gehäuse der elektromotorischen Antriebseinheit oder in einem separaten Bedienmodul bzw. Bedienterminal untergebracht sein, wie es weiter unten noch näher erläutert ist. Die Steuereinrichtung gibt insbesondere die Möglichkeit, den Öffnungs- und Schließvorgang der Abdeckung mit einem geeigneten Geschwindigkeitsprofil zu beaufschlagen, sowie sicherzustellen, dass die Abdeckung stets in die ihr zugedachte Schließposition, in welcher sie für die erforderliche Dichtigkeit der Abdeckung sorgt, überführt wird. Darüber hinaus kann es beispielsweise zu Reinigungs- oder Wartungszwecken sinnvoll sein, wenn die Abdeckung mittels der Steuereinrichtung in einer mehr oder minder beliebigen Teilöffnungsstellung angehalten werden kann.

Der Steuereinrichtung ist zweckmäßigerweise eine mit dieser in Wirkverbindung stehende Eingabeeinrichtung zugeordnet, wobei die Steuereinrichtung auf einen in die Eingabeeinrichtung eingebbaren Öffnungs- bzw. Schließbefehl die Abdeckung auf- bzw. zuklappt, indem sie den Elektromotor gesteuert in die Öffnungs- bzw. in die Schließrichtung in Rotation versetzt. Die Eingabeeinrichtung kann hierbei z.B. unmittelbar an dem Gehäuse der elektromotorischen Antriebseinheit angeordnet oder über Kabel mit dieser wirkverbunden sein, wobei sie vorzugsweise drahtlos mit der Steuereinrichtung und/oder mit der elektromotorischen Antriebseinheit in Verbindung steht, um für eine einfache Fernbedienbarkeit der elektromotorischen Antriebseinheit zu sorgen. Die Eingabeeinrichtung kann z.B. vorzugsweise
- im Führerhaus einer Zugmaschine, wie eines Traktors oder oder eines Straßenfahrzeugs, untergebracht oder
- von einem tragbaren Bedienterminal gebildet sein.

Wie bereits angedeutet, macht es die Steuereinrichtung möglich, die Bewegungsgeschwindigkeit der Vorgänge des Auf- und Zuklappens in geeigneter Weise zu steuern bzw. zu regeln, wobei vorzugsweise vorgesehen sein kann, dass die Steuereinrichtung den Elektromotor der elektromotorischen Antriebseinheit
- während des Öffnungsvorgangs und/oder
- während des Schließvorgangs
mit unterschiedlichen Drehgeschwindigkeiten ansteuert. In diesem Zusammenhang kann es günstig sein, wenn die Steuereinrichtung den Elektromotor der elektromotorischen Antriebseinheit während des Öffnungsvorgangs und/oder während des Schließvorgangs während einer Anfangsphase zunächst mit einer geringen Drehgeschwindigkeit antreibt, um die Abdeckung aus ihrer Öffnungs- bzw. Schließstellung auszuheben, sodann mit einer demgegenüber höheren Drehgeschwindigkeit antreibt und in einer Endphase schließlich wiederum mit einer geringen Drehgeschwindigkeit antreibt, um die Abdeckung in der Schließ- bzw. in der Öffnungsstellung abzulegen. Auf diese Weise ergibt sich eine schonende Betätigung des Klappmechanismus' der Abdeckung und wird die Sicherheit eines Einklemmens von Gliedmaßen in dem Klappmechanismus minimiert.

In diesem Zusammenhang kann es auch von Vorteil sein, wenn die Steuereinrichtung den Elektromotor der elektromotorischen Antriebseinheit in der Anfangsphase und/oder in der Endphase eines Öffnungs- bzw. Schließvorgangs, insbesondere kontinuierlich, auf die höhere Drehgeschwindigkeit beschleunigt bzw. verlangsamt. Die Anfangsphase und/oder die Endphase kann bzw. können dabei durch einen anfänglichen bzw. abschließenden Schwenkwinkel der Abdeckung zwischen etwa 5° und etwa 35°, insbesondere zwischen etwa 10° und etwa 30°, vorzugsweise zwischen etwa 15° und etwa 25°, definiert sein, d.h. bis zum Erreichen eines vorgenannten anfänglichen Schwenkwinkels und/oder ab Erreichen einer Klappstellung der Abdeckung, welche bis zum gänzlichen Erreichen ihrer Öffnungs- bzw. Schließstellung noch ein weiteres Klappen um einen vorgenannten Schwenkwinkel erfordert, wird die Drehgeschwindigkeit des Elektromotors abgesenkt bzw. kontinuierlich beschleunigt/verlangsamt.

Die der erfindungsgemäßen elektromotorischen Antriebseinheit zugeordnete Steuereinrichtung gibt ferner die Möglichkeit einer Überlastsicherung, um im Falle einer Blockierung des Klappmechanismus' Beschädigungen desselben zu vermeiden und insbesondere auch einen absolut sicheren Schutz vor einem Einklemmen von Gliedmaßen in dem Klappmechanismus zu gewährleisten. Eine solche Überlastsicherung kann beispielsweise dadurch gebildet sein, dass die Steuereinrichtung die zum Antrieb der elektromotorischen Antriebseinheit zur Verfügung stehende Stromstärke zumindest während des Aushebens und Absenkens der Abdeckung auf einen Maximalwert begrenzt, welcher mit einer, insbesondere voreinstellbaren, Öffnungs- bzw. Schließkraft korrespondiert. Als maximale Öffnungs- bzw. Schließkraft, bei welcher die Überlastsicherung auslöst und den Elektromotor der elektromotorischen Antriebseinheit stillsetzt, haben sich zu den vorgenannten Zwecken beispielweise maximal etwa 200 N, insbesondere maximal etwa 150 N, vorzugsweise maximal etwa 100 N, bewährt.

In weiterhin vorteilhafter Ausgestaltung kann die Steuereinrichtung mit einer Positionserfassungseinrichtung der elektromotorischen Antriebseinheit wirkverbunden sein, um die Ist-Stellung der mit der Abtriebswelle der elektromotorischen Antriebseinheit verbundenen Abdeckung bzw. deren Klappmechanismus' zu erfassen und die Soll-Stellung gegebenenfalls nachzuregeln. Als Positionserfassungseinrichtung kommen praktisch beliebige bekannte Sensoren in Betracht, welche insbesondere die Winkelposition von Wellen zu erfassen vermögen. So kann die Positionserfassungseinrichtung z.B. wenigstens einen Winkelsensor umfassen, welcher die Winkelstellung wenigstens einer Welle der motorischen Antriebseinheit zu erfassen vermag. Alternativ oder zusätzlich kann wenigstens einen Drehzahlsensor vorgesehen sein, welcher die Anzahl an Umdrehungen wenigstens einer Welle der motorischen Antriebseinheit zu erfassen vermag.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische perspektivische Ansicht des mit einer klappbaren Abdeckung versehenen Oberteil eines Behälters einer im Übrigen nicht dargestellten Verteilmaschine;
- Fig. 2: eine schematische perspektivische Detailansicht einer zur Betätigung der klappbaren Abdeckung gemäß Fig. 1 dienenden elektromotorischen Antriebseinheit einschließlich eines mit dieser verbundenen schwenkbaren Trägers der Abdeckung;
- Fig. 3: eine schematische perspektivische Ansicht der elektromotorischen Antriebseinheit gemäß Fig. 1 und 2 einschließlich eines Befestigungsflansches, mittels welchem sie an der Oberseite des Behälters montiert ist;
- Fig. 4: eine schematische perspektivische Explosionsdarstellung der elektromotorischen Antriebseinheit gemäß Fig. 1 bis 3;
- Fig. 5: eine schematische perspektivische Detailansicht der Explosionsdarstellung gemäß Fig. 4;
- Fig. 6: eine schematische Schnittansicht durch die elektromotorische Antriebseinheit entlang der Schnittebene VI-VI der Fig. 3;
- Fig. 7: eine schematische Schnittansicht durch die elektromotorische Antriebseinheit entlang der Schnittebene VII-VII der Fig. 3;
- Fig. 8: eine schematische perspektivische Detailansicht im Bereich der Verbindung des Mitnehmers der elektromotorischen Antriebseinheit mit dem schwenkbaren Träger der Abdeckung; und
- Fig. 9: eine schematische Seitenansicht des Details gemäß Fig. 8.

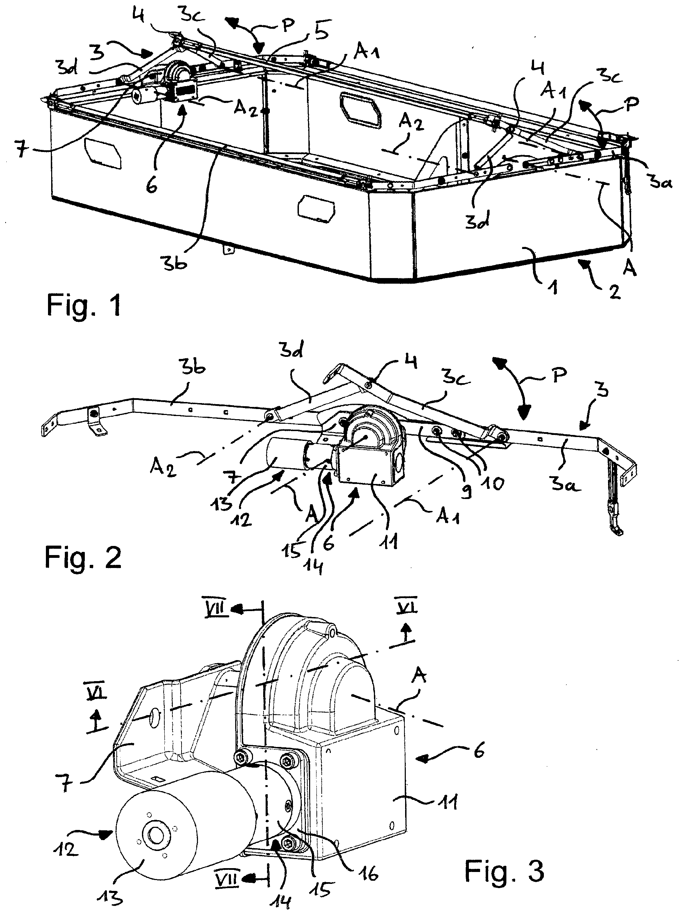

In Fig. 1 ist das Oberteil 1 eines ansonsten nicht gänzlich gezeigten Behälters 2 zur Aufnahme von pulver- bzw. partikelförmigem Streu- oder Saatgut einer gleichfalls nicht dargestellten Verteilmaschine dargestellt, bei welcher es sich insbesondere um eine üblichen landwirtschaftliche Streu- oder Sämaschine oder um eine Winterdienststreumaschine handeln kann. An der Oberseite des Behälters 2 ist eine klappbare Abdeckung 3 montiert, welche beim vorliegenden Ausführungsbeispiel um eine etwa horizontale Achse A, welche parallel zu den entgegengesetzten Längsseiten des Behälters 2 und im Wesentlichen mittig zu denselben angeordnet ist, in Richtung des Pfeils P auf und zu klappbar ist. In der in Fig. 1 wiedergegebenen Stellung verschließt die Abdeckung 3 den Behälter 2 gänzlich, während sie in ihrer nicht gezeigten Öffnungsstellung etwa den halben Öffnungsquerschnitt des Behälteroberteils 1 freigibt, um den Behälter 2 mit Streugut befüllen, ihn reinigen zu können etc.

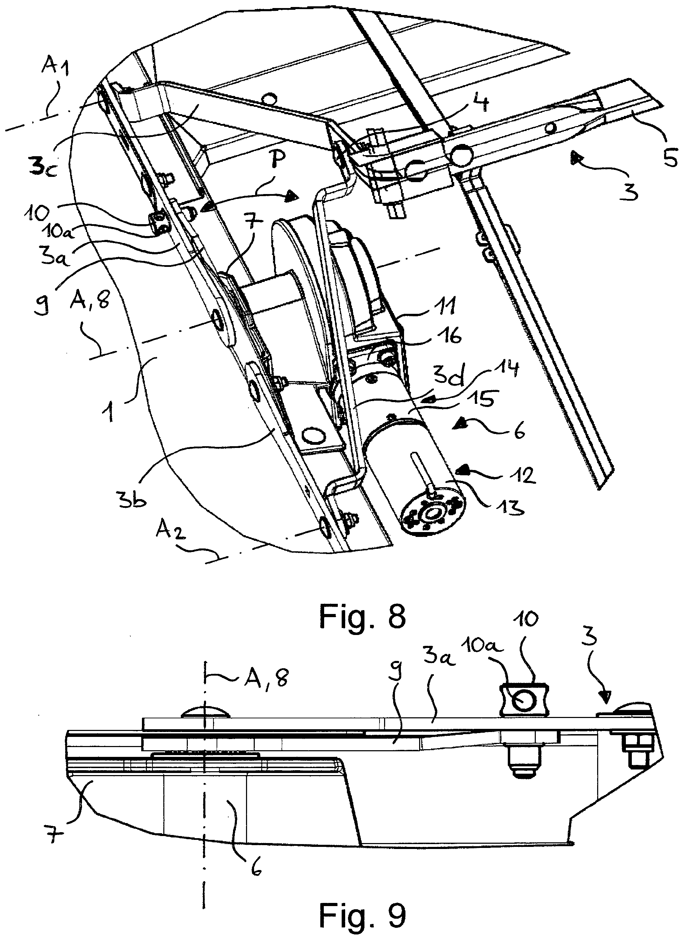

Die Abdeckung 3 umfasst ein Traggestänge 3a, 3b, 3c, 3d, 5, welches z.B. einerseits einen um die Achse A schwenkbaren, etwa U-förmigen Bügelträger 3a besitzt, welcher sich in der in Fig. 1 wiedergegebenen Schließstellung mit je einem U-Schenkel von der Achse A fort parallel zu den entgegengesetzten Querseiten des Behälteroberteils 1 und parallel zu der in Fig. 1 rechten Längsseite des Behälteroberteils 1 erstreckt und auf der Oberseite desselben zur Anlage kommt. Um hierbei für eine einwandfreie Abdichtung zu sorgen, kann an der Oberseite des Behälteroberteils 1 ein zu dem Bügelträger 3a im Wesentlichen komplementäres Dichtungsprofil montiert sein (in Fig. 1 nicht erkennbar). Ein weiterer, ebenfalls etwa U-förmiger Bügelträger 3b ist im Wesentlichen achssymmetrisch zu dem schwenkbaren Bügelträger 3a oder unter einem demgegenüber geringen Querversatz stationär auf dem Behälteroberteil 1 montiert und erstreckt sich mit seinen U-Stegen gleichfalls parallel zu den entgegengesetzten Querseiten des Behälteroberteils 1 und parallel zu der in Fig. 1 linken Längsseite des Behälteroberteils 1. In der Öffnungsstellung (nicht gezeigt) gelangt der schwenkbare Bügelträger 3a der Abdeckung 3 an dem stationären Bügelträger 3b zur Anlage. Wie insbesondere auch aus den Fig. 2 und 8 ersichtlich, ist an jedem U-Schenkel der beiden Bügelträger 3a, 3b an einem einander zugewandten Abschnitt derselben je ein um eine horizontale, zur Schwenkachse A parallele Achse A₁, A₂ schwenkbarer Träger 3c, 3d angelenkt, dessen Länge in der geschlossenen Stellung der Abdeckung 3, in welcher der schwenkbare Bügelträger 3a und der stationäre Bügelträger 3b im Wesentlichen in ein und derselben Horizontalebene angeordnet sind, größer ist als der Abstand der Achsen A₁ und A₂, wobei die Träger 3c, 3d ferner im Bereich ihres der jeweiligen Achse A₁, A₂ fernen Endes mittels eines Gelenks 4 aneinander angelenkt sind. Folglich bilden die jeweils beiden Träger 3c, 3d mit den Bügelträgern 3a, 3b in der geschlossenen Stellung der Abdeckung 3 im Wesentlichen ein Dreieck, während sie in der geöffneten Stellung (nicht gezeigt), wenn der um die Schwenkachse A schwenkbare Bügelträger 3a in Richtung des Pfeils P um die Achse A verschwenkt worden ist und an dem stationären Bügelträger 3b zur Anlage gelangt, im Wesentlichen parallel zu den U-Schenkeln der Bügelträger 3a, 3b angeordnet sind. Im Bereich des der Achse A₁ und/oder A₂ fernen Endes zumindest eines der Träger 3c, 3d ist eine sich parallel zu den U-Stegen der Bügelträger 3a, 3b erstreckende Stange 5 montiert, welche in der geschlossenen Stellung der Abdeckung 3 (Fig. 1) folglich zwischen den U-Stegen der Bügelträgern 3a, 3b und auf einem demgegenüber höheren Niveau angeordnet ist. Die Bügelträger 3a, 3b sind beispielsweise mit einer - nicht dargestellten - Abdeckplane bespannt, welche sich zwischen den U-Stegen der Bügelträger 3a, 3b und zweckmäßigerweise auch deren U-Schenkel und über die Stange 5 hinweg erstreckt, so dass sie in der geschlossenen Stellung der Abdeckung eine etwa dachförmige Erstreckung besitzt, um insbesondere Niederschlagswasser abfließen zu lassen. Die Abdeckung 3 entspricht insoweit einer mittels einer geeigneten Handhabe des schwenkbaren Bügels 3a manuell betätigbaren Abdeckung, wie sie eingangs beschrieben ist und die dort erwähnten Nachteile besitzt.

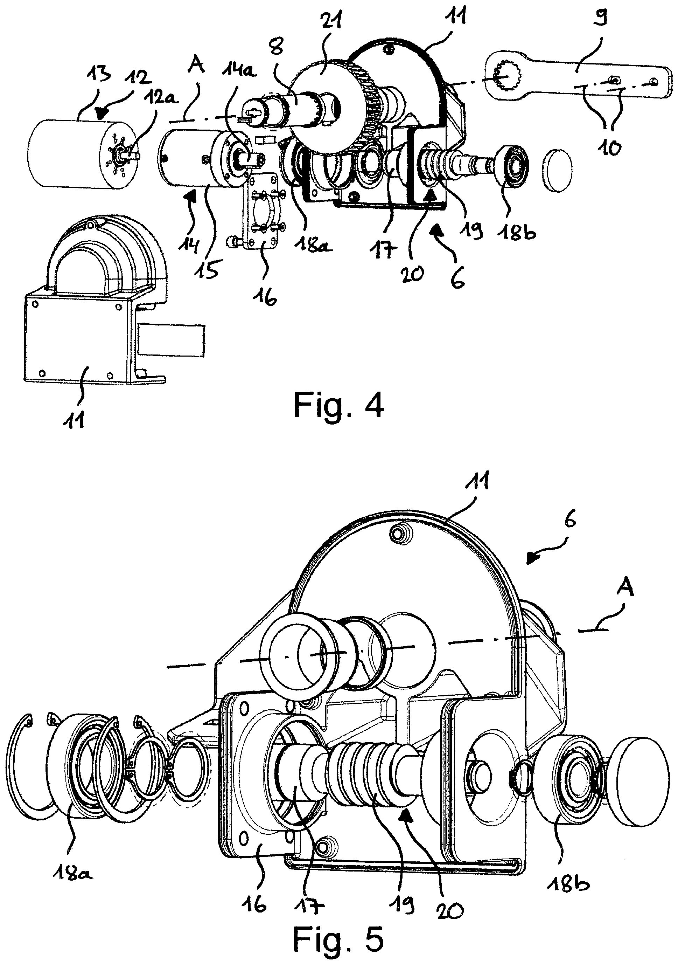

Wie des Weiteren der Fig. 1 und insbesondere auch den Fig. 2, 3 und 8 zu entnehmen ist, ist die Abdeckung 3 mittels einer elektromotorischen Antriebseinheit 6 betätigt, welche mittels eines Befestigungsflansches 7 derart am oberen Rand des Behälteroberteils 1 im Bereich der Schwenkachse A der Abdeckung 3 festgelegt ist, dass ihre Abtriebswelle 8 (vgl. hierzu auch die Fig. 4 bis 8) koaxial zur Schwenkachse A der klappbaren Abdeckung 3 angeordnet ist. Auf der - z.B. zumindest abschnittsweise als Profilwelle ausgebildeten - Abtriebswelle 8 sitzt drehfest ein Mitnehmer 9 (vgl. insbesondere Fig. 2, 4 und 6), welcher sich radial von der Abtriebswelle 8 fort erstreckt und, z.B. mittels einer oder mehrerer lösbarer Schrauben 10, mit dem in Fig. 1 linken U-Schenkel des schwenkbaren Bügelträgers 3a der Abdeckung 3 verbunden ist, um ihn in Richtung des Pfeils P zu verschwenken und die Abdeckung 3 auf diese Weise auf und zu zu klappen.

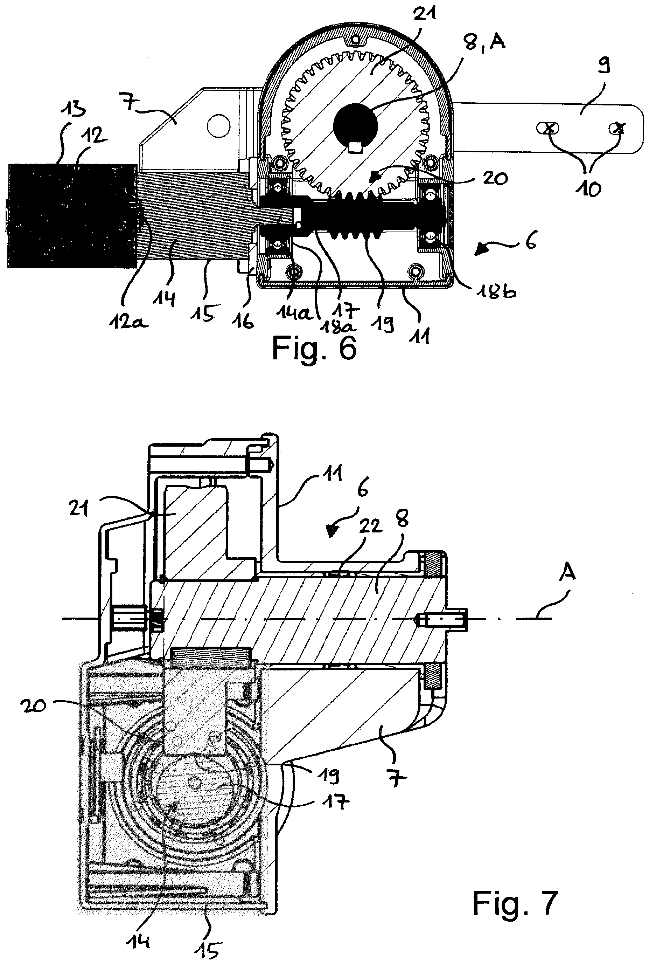

Mit Ausnahme des freien Endes der Abtriebswelle 8, auf welchem der Mitnehmer 9 sitzt, sind sämtliche Komponenten der elektromotorischen Antriebseinheit 6 in einem staub- und flüssigkeitsdichten, allseitig geschlossenen Gehäuse 11 untergebracht und/oder sind die Gehäuse einzelner Komponenten der elektromotorischen Antriebseinheit 6 staub- und flüssigkeitsdicht an dem Gehäuse 11 festgelegt. So umfasst die elektromotorische Antriebseinheit 6 beim vorliegenden Ausführungsbeispiel einen Elektromotor 12 mit einem Gehäuse 13, welches derart an dem Gehäuse 15 eines Getriebes 14 - hier: in Form eines Planetengetriebes - festgelegt ist, dass die Abtriebswelle 12a des Elektromotors 12 in das Getriebegehäuse 15 hineinragt und somit die Antriebswelle des Getriebes 14 bildet. Das Gehäuse 15 des in Form eines Planetengetriebes ausgebildeten Getriebes 14 ist an einer Befestigungsplatte 16 befestigt, wie beispielsweise verschraubt, wobei die Befestigungsplatte 16 wiederum derart an dem Gehäuse 11 befestigt ist, dass sich die Abtriebswelle 14a (vgl. Fig. 4 und 6) des Getriebes in das Gehäuse 11 hinein erstreckt und die aus dem Elektromotor 12 und dem Getriebe 14 gebildete Einheit mittels der Befestigungsplatte 16 an dem Gehäuse 11 festgelegt ist. Wie weiterhin insbesondere den Fig. 4 bis 7 zu entnehmen ist, ist im Innern des Gehäuses 11 eine drehfest mit der Abtriebswelle 14a des (Planeten)getriebes 14 verbundene Welle 17 gelagert, wie beispielsweise mittels zweier im Innern des Gehäuses 11 angeordneter Kugellager 18a, 18b. An ihrem mittleren, zwischen den Kugellagern 18a, 18b angeordneten Abschnitt ist die Welle 17 mit einem Schneckengewinde 19 versehen, welches unter Bildung eines weiteren Getriebes 20 in Form eines Schneckenradgetriebes mit einem Schneckenrad 21 im Eingriff steht, welches drehfest auf der Abtriebswelle 8 der elektromotorischen Antriebseinheit 6 sitzt, welche gleichfalls in dem Gehäuse 11 gelagert und senkrecht zu der Welle 17 angeordnet ist. Wie in Fig. 7 erkennbar, ist die Abtriebswelle 8 der elektromotorischen Antriebseinheit 6 mittels einer Gleitringdichtung 22 gegen das Gehäuse 11 abgedichtet. Während das dem Elektromotor 12 unmittelbar nachgeordnete Planetengetriebe 14 z.B. ein Übersetzungsverhältnis von etwa 1:70 besitzen kann, kann das dem Planetengetriebe 14 nachgeordnete Schneckenradgetriebe 20 beispielsweise ein Übersetzungsverhältnis von etwa 1:20 aufweisen, so dass die Getriebeanordnung 14, 20 insgesamt ein Übersetzungsverhältnis von etwa 1:1400 besitzt.

Die Stromversorgung der elektromotorischen Antriebseinheit 6 kann insbesondere mittels einer (nicht dargestellten) elektrischen Schnittstelle, wie eines Anschlusses, erfolgen, welche(r) an die elektrische Stromversorgung einer (gleichfalls nicht dargestellten) Zugmaschine, wie eines Traktors oder eines Straßenfahrzeugs, anschließbar ist. Die elektrische Antriebseinheit 6 umfasst überdies eine Steuereinrichtung mit einer Steuerplatine (ebenfalls nicht zeichnerisch dargestellt), welche entweder in dem Gehäuse 11 oder auch in einem separaten Bedienterminal mit einer Eingabeeinrichtung untergebracht sein kann, um die Abdeckung 3 auf einen Eingabebefehl hin automatisch und insbesondere fernbedienbar öffnen und schließen zu können. Die Steuereinrichtung gibt ferner insbesondere die weiter oben genannten Möglichkeiten einer Ansteuerung des Elektromotors 12 der elektromotorischen Antriebseinheit 6 mit unterschiedlichen Drehgeschwindigkeiten während des Öffnungs- und/oder Schließvorgangs sowie die Implementierung einer Überlastsicherung, welche die elektromotorische Antriebseinheit 6 z.B. bei einer auftretenden Öffnungs- und/oder Schließkraft, welche über ca. 100 N hinausgeht, stillsetzt und auf diese Weise ein Einklemmen von Gliedmaßen oder auch eine Beschädigung der Abdeckung 3 im Falle einer mechanischen Blockierung verhindert. Schließlich kann die Steuereinrichtung mit einem oder mehreren Sensoren (nicht gezeigt) einer Positionserfassungseinrichtung kommunizieren, um die Ist-Stellung der Abdeckung 3 zu erfassen und deren Soll-Stellungen, wie insbesondere die vorgesehene Schließstellung (Fig. 1) und die gänzliche Öffnungsstellung erforderlichenfalls nachzuregeln.

Wie insbesondere den Fig. 8 und 9 zu entnehmen ist, ist der Mitnehmer 8 der elektromotorischen Antriebseinheit 6 lösbar mit dem schwenkbaren Träger 3a der Abdeckung 3 verbunden, wobei er alternativ oder zusätzlich auch lösbar mit der elektromotorischen Antriebseinheit 6 verbunden sein könnte (nicht gezeigt). Folglich lässt sich die Abdeckung 3 nach Lösen des Mitnehmers 8 von dem schwenkbaren Träger 3a der Abdeckung 3 manuell auf- und zu klappen. Zur lösbaren Verbindung dient/dienen beim vorliegenden Ausführungsbeispiel die den Mitnehmer 8 mit der schwenkbaren Träger 3a verbindende(n) Schraube(n) 10, wobei in Fig. 8 und 9 nur eine solche Schraube 10 wiedergegeben ist. Die Schraube 10 weist im vorliegenden Fall wenigstens eine ihren Kopf durchsetzende und etwa senkrecht zu ihrem Schaft verlaufende Bohrung 10a auf, welche es ihr ermöglicht, auf einfache Weise mittels eines Werkzeugs, z.B. nach Art eines Hebels, wie beispielsweise eines etwa L-förmig abgewinkelten Hebels (nicht dargestellt), gelöst und festgezogen zu werden, indem ein Ende des Werkzeugs in die Bohrung 10a eingeführt und in Umfangsrichtung der Schraube 10 gedreht wird. Das Werkzeug kann vorzugsweise zugleich zur manuellen Betätigung der Abdeckung dienen, um diese in die Öffnungs- bzw. in die Schließstellung kurbeln zu können, ohne die Abdec-. kung 3 direkt manuell ergreifen zu müssen und dabei die Gefahr eines Einklemmens einzugehen. Indes kann die lösbare Verbindung zwischen dem Mitnehmer 9 und dem schwenkbaren Träger 3a (oder auch zwischen dem Mitnehmer 9 und der Antriebseinheit 6) freilich auch andersartig gebildet sein, wie z.B. mittels einer lösbaren Klemm- oder Rastverbindung (nicht gezeigt), wobei grundsätzlich sowohl form- als auch kraftschlüssige, lösbare Verbindungsarten in Betracht kommen. Wie bereits weiter oben erwähnt, kann eine solche lösbare Verbindung zwischen einem schwenkbaren Träger 3a der Abdeckung 3 und dem Mitnehmer 9 und/oder zwischen letzterem und der Antriebseinheit 6 auch für andersartige Antriebe der Abdeckung 3 als die erfindungsgemäße elektromotorische Antriebseinheit 6 günstig sein kann, wie z.B. für herkömmliche Elektro-, Hydraulik-, Pneumatikzylinder oder dergleichen, wobei in diesem Fall beispielsweise der jeweilige Zylinder von einem schwenkbaren Träger der Abdeckung in entsprechender Weise lösbar sein kann, um eine manuelle (Not)betätigung der Abdeckung 3 zu gewährleisten.

## Patentansprüche

1. Verteilmaschine, insbesondere Streu- und/oder Sämaschine, mit wenigstens einem von einem Tragrahmen getragenen Behälter (2) zur Aufnahme von pulver- und/oder partikelförmigem Gut, wenigstens einer am Boden des Behälters (2) angeordneten Auslauföffnung, einem der Auslauföffnung nachgeordneten Dosierorgan sowie einem dem Dosierorgan nachgeordneten Verteilorgan zum Verteilen des pulver- und/oder partikelförmigen Gutes auf dem Boden, wobei der Behälter (2) eine um eine Schwenkachse (A) auf- und zu klappbare, von einer an dem Behälter (2) oder an dessen Tragrahmen festgelegten Antriebseinheit betätigte Abdeckung (3) aufweist, welche in ihrer zugeklappten Stellung den Öffnungsquerschnitt des Behälters (2) abdeckt und in ihrer aufgeklappten Stellung zumindest einen Teil des Öffnungsquerschnittes des Behälters (2) freigibt, **dadurch gekennzeichnet, dass** die Abdeckung (3) von einer elektromotorischen Antriebseinheit (6) mit wenigstens einem, deren Elektromotor (12) nachgeordneten Getriebe (14, 20) betätigt ist, wobei die elektromotorische Antriebseinheit (6) eine Abtriebswelle (8) aufweist, auf welcher drehfest ein Mitnehmer (9) sitzt, welcher mit wenigstens einem schwenkbaren Träger (3a) der Abdeckung (3) verbunden oder von einem solchen schwenkbaren Träger gebildet ist.

2. Verteilmaschine nach Anspruch 1, **dadurch gekennzeichnet, dass** die elektromotorische Antriebseinheit (6) in wenigstens einem Gehäuse (11, 13, 15) untergebracht ist, wobei das wenigstens eine Gehäuse (11, 13, 15) insbesondere
- im Wesentlichen staub- und flüssigkeitsdicht ausgestaltet und/oder
- die Abtriebswelle (8) der elektromotorischen Antriebseinheit (6), insbesondere mittels wenigstens einer Gleitringdichtung (22), gegen das Gehäuse (11) abgedichtet
ist.

3. Verteilmaschine nach Anspruch 1 oder 2, **dadurch gekennzeichnet, dass** die elektromotorische Antriebseinheit (6) an wenigstens einem, insbesondere an genau einem, Befestigungsflansch (7) festgelegt ist, welcher an dem Behälter (2) oder an dessen Tragrahmen befestigt ist.

4. Verteilmaschine nach einem der Ansprüche 1 bis 3, **dadurch gekennzeichnet, dass** das oder die Getriebe (14, 20) ein Übersetzungsverhältnis von insgesamt wenigstens 1:300, insbesondere von wenigstens 1:600, vorzugsweise von wenigstens 1:900, aufweist/aufweisen.

5. Verteilmaschine nach einem der Ansprüche 1 bis 4, **dadurch gekennzeichnet, dass** dem Elektromotor (12) der elektromotorischen Antriebseinheit (6) wenigstens ein Planetengetriebe (14) und/oder wenigstens ein Schneckenradgetriebe (20) nachgeordnet ist.

6. Verteilmaschine nach einem der Ansprüche 1 bis 5, **dadurch gekennzeichnet, dass** die elektromotorische Antriebseinheit (6) von der elektrischen Stromversorgung einer Zugmaschine, wie eines Traktors oder eines Straßenfahrzeugs, mit Strom versorgt ist, wobei die elektromotorische Antriebseinheit (6) insbesondere eine elektrische Schnittstelle aufweist, welche an die elektrische Stromversorgung der Zugmaschine anschließbar ist.

7. Verteilmaschine nach einem der Ansprüche 1 bis 6, **dadurch gekennzeichnet, dass** der Mitnehmer (8) der elektromotorischen Antriebseinheit (6) lösbar mit dem wenigstens einen schwenkbaren Träger (3a) der Abdeckung (3) und/oder mit der elektromotorischen Antriebseinheit (6) verbunden ist, so dass die Abdeckung (3) nach Lösen des Mitnehmers (8) von der Antriebseinheit (6) und/oder von dem schwenkbaren Träger (3a) der Abdeckung (3) manuell auf- und zu klappbar ist.

8. Verteilmaschine nach einem der Ansprüche 1 bis 7, **dadurch gekennzeichnet, dass** der elektromotorischen Antriebseinheit (6) eine Steuereinrichtung zugeordnet ist, welche insbesondere wenigstens eine Steuerplatine umfasst.

9. Verteilmaschine nach Anspruch 8, **dadurch gekennzeichnet, dass** die Steuereinrichtung, insbesondere drahtlos, mit einer Eingabeeinrichtung in Verbindung steht, wobei die Steuereinrichtung auf einen in die Eingabeeinrichtung eingebbaren Öffnungs- bzw. Schließbefehl die Abdeckung (3) auf- bzw. zuklappt, indem sie den Elektromotor (12) gesteuert in die Öffnungs- bzw. in die Schließrichtung in Rotation versetzt, wobei die Eingabeeinrichtung insbesondere
- im Führerhaus einer Zugmaschine, wie eines Traktors oder eines Straßenfahrzeugs, untergebracht oder
- von einem tragbaren Bedienterminal gebildet ist.

10. Verteilmaschine nach Anspruch 8 oder 9, **dadurch gekennzeichnet, dass** die Steuereinrichtung den Elektromotor (12) der elektromotorischen Antriebseinheit (6)
- während des Öffnungsvorgangs und/oder
- während des Schließvorgangs
mit unterschiedlichen Drehgeschwindigkeiten ansteuert, wobei sie den Elektromotor (12) der elektromotorischen Antriebseinheit (6) insbesondere während einer Anfangsphase zunächst mit einer geringen Drehgeschwindigkeit antreibt, um die Abdeckung (3) aus ihrer Öffnungs- bzw. Schließstellung auszuheben, sodann mit einer demgegenüber höheren Drehgeschwindigkeit antreibt und in einer Endphase schließlich wiederum mit einer geringen Drehgeschwindigkeit antreibt, um die Abdeckung (3) in der Schließ- bzw. in der Öffnungsstellung abzulegen.

11. Verteilmaschine nach Anspruch 10, **dadurch gekennzeichnet, dass** die Steuereinrichtung den Elektromotor (12) in der Anfangsphase und/oder in der Endphase eines Öffnungs- bzw. Schließvorgangs, insbesondere kontinuierlich, auf die höhere Drehgeschwindigkeit beschleunigt bzw. verlangsamt.

12. Verteilmaschine nach Anspruch 10 oder 11, **dadurch gekennzeichnet, dass** die Anfangsphase und/oder die Endphase durch einen anfänglichen bzw. abschließenden Schwenkwinkel der Abdeckung (3) zwischen 5° und 35°, insbesondere zwischen 10° und 30°, vorzugsweise zwischen 15° und 25°, definiert ist.

13. Verteilmaschine nach einem der Ansprüche 8 bis 12, **dadurch gekennzeichnet, dass** die Steuereinrichtung eine Überlastsicherung aufweist, wobei die Überlastsicherung insbesondere dadurch gebildet ist, dass die Steuereinrichtung den zum Antrieb der elektromotorischen Antriebseinheit (6) zur Verfügung stehenden Strom zumindest während des Aushebens und Absenkens der Abdeckung (3) auf einen Maximalwert begrenzt, welcher mit einer, insbesondere voreinstellbaren, Öffnungs- bzw. Schließkraft korrespondiert.

14. Verteilmaschine nach Anspruch 13, **dadurch gekennzeichnet, dass** die Öffnungs- bzw. Schließkraft, bei welcher die Überlastsicherung auslöst, maximal 200 N, insbesondere maximal 150 N, vorzugsweise maximal 100 N, beträgt.

15. Verteilmaschine nach einem der Ansprüche 8 bis 14, **dadurch gekennzeichnet, dass** die Steuereinrichtung mit einer Positionserfassungseinrichtung der elektromotorischen Antriebseinheit (6) wirkverbunden ist, um die Ist-Stellung der Abdeckung (3) zu erfassen und die Soll-Stellung gegebenenfalls nachzuregeln, wobei die Positionserfassungseinrichtung insbesondere
- wenigstens einen Winkelsensor, welcher die Winkelstellung wenigstens einer Welle (8, 12a, 14a, 17) der motorischen Antriebseinheit (6) zu erfassen vermag, und/oder
- wenigstens einen Drehzahlsensor, welcher die Anzahl an Umdrehungen wenigstens einer Welle (8, 12a, 14a, 17) der motorischen Antriebseinheit (6) zu erfassen vermag,
aufweist.

## Claims

1. Distribution machine, in particular spreader machine and/or sowing machine, having at least one container (2) which is supported by a supporting frame for holding powder and/or particulate material, at least one discharge opening which is arranged on the floor of the container (2), a metering element which is arranged downstream of the discharge opening, and a distribution element which is arranged downstream of the metering element and which serves the purpose of distributing the powder and/or particulate material on the ground, wherein the container (2) has a cover (3) which can be folded open and closed about a pivoting axis (A) and is activated by a drive unit which is fixed to the container (2) or to the supporting frame thereof, which cover (3) covers, in its folded-closed position, the opening cross section of the container (2), and in its folded-open position clears at least part of the opening cross section of the container (2), **characterized in that** the cover (3) is activated by an electric-motor-powered drive unit (6) having at least one transmission (14, 20) which is arranged downstream of the electric motor (12) of said drive unit (6), wherein the electric-motor-powered drive unit (6) has an output shaft (8), on which a driver (9) is seated in a rotationally fixed fashion, said driver (9) being connected to at least one pivotable carrier (3a) of the cover (3) or being formed by such a pivotable carrier.

2. Distribution machine according to Claim 1, **characterized in that** the electric-motor-powered drive unit (6) is accommodated in at least one housing (11, 13, 15), wherein the at least one housing (11, 13, 15) is, in particular,
- configured in an essentially dust-tight and liquid-tight fashion and/or
- seals the output shaft (8) of the electric-motor-powdered drive unit (6) with respect to the housing (11), in particular by means of at least one sliding ring seal (22).

3. Distribution machine according to Claim 1 or 2, **characterized in that** the electric-motor-powered drive unit (6) is fixed to at least one, in particular to precisely one, attachment flange (7) which is attached to the container (2) or to the supporting frame thereof.

4. Distribution machine according to one of Claims 1 to 3, **characterized in that** the transmission or transmissions (14, 20) has/have a transmission ratio of in total at least 1:300, in particular of at least 1:600, preferably of at least 1:900.

5. Distribution machine according to one of Claims 1 to 4, **characterized in that** at least one planetary gear mechanism (14) and/or at least one worm gear mechanism (20) is arranged downstream of the electric motor (12) of the electric-motor-powered drive unit (6).

6. Distribution machine according to one of Claims 1 to 5, **characterized in that** the electric-motor-powered drive unit (6) is supplied with power by the electric power supply of a traction machine such as a tractor or a road vehicle, wherein the electric-motor-powered drive unit (6) has, in particular, an electric interface which can be connected to the electric power supply of the traction machine.

7. Distribution machine according to one of Claims 1 to 6, **characterized in that** the driver (8) of the electric-motor-powered drive unit (6) is detachably connected to the at least one pivotable carrier (3a) of the cover (3) and/or to the electric-motor-powered drive unit (6), such that after the disconnection of the driver (8) from the drive unit (6) and/or from the pivotable carrier (3a) of the cover (3) the cover (3) can be folded open and closed manually.

8. Distribution machine according to one of Claims 1 to 7, **characterized in that** the electric-motor-powered drive unit (6) is assigned a control device which comprises, in particular, at least one control circuit board.

9. Distribution machine according to Claim 8, **characterized in that** the control device is connected to an input device, in particular in a wireless fashion, wherein, in response to an opening or closing command which can be input into the input device, the control device folds the cover (3) open or closed by causing the electric motor (12) to rotate in a controlled fashion in the opening direction or in the closing direction, wherein, in particular, the input device
- is accommodated in the driver's cab of a traction machine, such as a tractor or a road vehicle, or
- is formed by a portable operator control terminal.

10. Distribution machine according to Claim 8 or 9, **characterized in that** the control device actuates the electric motor (12) of the electric-motor-powered drive unit (6) with different rotational speeds
- during the opening process and/or
- during the closing process,
wherein said control device drives the electric motor (12) of the electric-motor-powered drive unit (6) initially with a low rotational speed, in particular during an initial phase, in order to lift out the cover (3) from its open position or closed position, then drives it with a rotational speed which is higher in comparison, and in an end phase finally drives it in turn with a low rotational speed, in order to put down the cover (3) in the closed position or in the opened position.

11. Distribution machine according to Claim 10, **characterized in that**, in the initial phase and/or in the end phase of an opening or closing process, the control device speeds up the electric motor (12) to the relatively high rotational speed or slows it down, in particular continuously.

12. Distribution machine according to Claim 10 or 11, **characterized in that** the initial phase and/or the end phase are/is defined by an initial or final pivoting angle of the cover (3) between 5° and 35°, in particular between 10° and 30°, preferably between 15° and 25°.

13. Distribution machine according to one of Claims 8 to 12, **characterized in that** the control device has an overload protection, wherein the overload protection is formed, in particular, by virtue of the fact that the control device limits the current available to drive the electric-motor-powered drive unit (6), at least during the lifting and lowering of the cover (3), to a maximum value which corresponds to an, in particular, pre-settable opening or closing force.

14. Distribution machine according to Claim 13, **characterized in that** the opening or closing force at which the overload protection is triggered is at maximum 200 N, in particular at maximum 150 N, preferably at maximum 100 N.

15. Distribution machine according to one of Claims 8 to 14, **characterized in that** the control device is operatively connected to a position-detection device of the electric-motor-powered drive unit (6), in order to detect the actual position of the cover (3) and, if appropriate, to adjust the target position, wherein the position-detection device has, in particular,
- at least one angle sensor which is capable of detecting the angular position of at least one shaft (8, 12a, 14a, 17) of the motor-powered drive unit (6),
and/or
- at least one rotational speed sensor which is capable of detecting the number of revolutions of at least one shaft (8, 12a, 14a, 17) of the motor-powered drive unit (6).

## Revendications

1. Épandeur, notamment machine à disperser et/ou à semer, avec au moins une cuve (2) supportée par un cadre porteur, pour recevoir un produit sous forme de poudre ou de particules, avec au moins une ouverture d'évacuation disposée au fond de la cuve (2), avec un organe de dosage placé en aval de l'ouverture d'évacuation ainsi qu'avec un organe d'épandage placé en aval de l'organe de dosage pour l'épandage de produit sous forme de poudre ou de particules sur le sol, la cuve (2) comportant un cache (3) pouvant être ouvert et fermé par rabattement autour d'un axe de pivotement (A), actionné par une unité d'entraînement fixée à la cuve (2) ou à son cadre porteur et recouvrant dans sa position de rabattement fermée la section transversale d'ouverture de la cuve (2) et libérant dans sa position de rabattement ouverte au moins une partie de la section transversale d'ouverture de la cuve (2), **caractérisé en ce que** le cache (3) est actionné par une unité d'entraînement électromotorisée (6) avec au moins un engrenage (14, 20) placé en aval de son moteur électrique (12), l'unité d'entraînement électromotorisée (6) comportant un arbre d'entraînement en sortie (8) sur lequel repose solidairement en rotation un doigt d'entraînement (9) relié à au moins un support (3a) pivotant du cache (3) ou formé par un tel support pivotant.

2. Épandeur selon la revendication 1, **caractérisé en ce que** l'unité d'entraînement électromotorisée (6) est logée dans au moins un carter (11, 13, 15), l'au moins un carter (11, 13, 15) :
- étant notamment réalisé pour être pour l'essentiel étanche à la poussière et aux fluides ; et/ou
- l'arbre d'entraînement en sortie (8) de l'unité d'entraînement électromotorisée (6), étant notamment étanchéifié par rapport au carter (11) à l'aide d'au moins un joint à bague coulissante (22).

3. Épandeur selon la revendication 1 ou 2, **caractérisé en ce que** l'unité d'entraînement électromotorisée (6) est fixée à au moins un, notamment à précisément un flasque de fixation (7) fixé à la cuve (2) ou à son cadre porteur.

4. Épandeur selon l'une quelconque des revendications 1 à 3, **caractérisé en ce que** le ou les engrenages (14, 20) présentent un rapport de démultiplication d'au total au moins 1:300, notamment d'au moins 1:600, de préférence d'au moins 1:900.

5. Épandeur selon l'une quelconque des revendications 1 à 4, **caractérisé en ce qu'**au moins un engrenage planétaire (14) et/ou au moins un engrenage à roue hélicoïdale (20) est placé en aval du moteur électrique (12) de l'unité d'entraînement électromotorisée (6).

6. Épandeur selon l'une quelconque des revendications 1 à 5, **caractérisé en ce que** l'unité d'entraînement électromotorisée (6) est alimentée en courant par l'alimentation en courant électrique d'une machine de traction, par exemple un tracteur ou un véhicule, l'unité d'entraînement électromotorisée (6) comportant notamment une interface électrique pouvant être raccordée à l'alimentation en courant électrique de la machine de traction.

7. Épandeur selon l'une quelconque des revendications 1 à 6, **caractérisé en ce que** le doigt d'entraînement (8) de l'unité d'entraînement électromotorisée (6) est relié de façon amovible à l'au moins un support pivotant (3a) du cache (3) et/ou à l'unité d'entraînement électromotorisée (6), de sorte que le cache (3) puisse être ouvert et fermé manuellement par rabattement par rapport à l'unité d'entraînement (6) et/ou par rapport au support pivotant (3a) du cache (3) après desserrage du doigt d'entraînement (8).

8. Épandeur selon l'une quelconque des revendications 1 à 7, **caractérisé en ce qu'**un dispositif de commande est associé à l'unité d'entraînement électromotorisée (6), ledit dispositif comprenant notamment au moins une platine de commande.

9. Épandeur selon la revendication 8, **caractérisé en ce que** le dispositif de commande est relié, notamment sans fil, à un dispositif d'entrée, le dispositif de commande ouvrant et/ou fermant par rabattement le cache (3) à réception d'un ordre d'ouverture et/ou de fermeture saisi dans le dispositif d'entrée, ce dispositif faisant tourner de façon commandée le moteur électrique (12) dans la direction d'ouverture et/ou de fermeture, le dispositif d'entrée :
- étant notamment logé dans l'habitacle d'une machine de traction, telle qu'un tracteur ou un véhicule ; ou
- étant formé par un terminal de commande portatif.

10. Épandeur selon la revendication 8 ou 9, **caractérisé en ce que** le dispositif de commande commande le moteur électrique (12) de l'unité d'entraînement électromotorisée (6):
- pendant le processus d'ouverture ; et/ou
- pendant le processus de fermeture ;
avec différentes vitesses de rotation, le dispositif entraînant le moteur électrique (12) de l'unité d'entraînement électromotorisée (6) notamment pendant une phase de démarrage d'abord à une vitesse de rotation réduite, pour sortir le cache (3) de sa position d'ouverture et/ou de fermeture, puis l'entraînant à une vitesse de rotation plus élevée et l'entraînant dans une phase finale pour finir de nouveau à une vitesse de rotation réduite, pour placer le cache (3) dans la position de fermeture et/ou d'ouverture.

11. Épandeur selon la revendication 10, **caractérisé en ce que** le dispositif de commande fait accélérer et/ou ralentir le moteur électrique (12) dans la phase de démarrage et/ou dans la phase finale d'un processus d'ouverture et/ou de fermeture, notamment en continu, jusqu'à atteindre la vitesse de rotation supérieure ou en partant de celle-ci.

12. Épandeur selon la revendication 10 ou 11, **caractérisé en ce que** la phase de démarrage et/ou la phase finale est définie par un angle de pivotement initial et/ou terminal du cache (3) compris entre 5° et 35°, notamment entre 10° et 30°, de préférence entre 15° et 25°.

13. Épandeur selon l'une quelconque des revendications 8 à 12, **caractérisé en ce que** le dispositif de commande comporte une sécurité anti-surcharge, la sécurité anti-surcharge étant notamment formée en amenant le dispositif de commande à limiter à une valeur maximale le courant mis à disposition pour l'entraînement de l'unité d'entraînement électromotorisée (6) au moins pendant le soulèvement et l'abaissement du cache (3), cette valeur correspondant à une force d'ouverture et/ou de fermeture notamment préréglable.

14. Épandeur selon la revendication 13, **caractérisé en ce que** la force d'ouverture et/ou de fermeture à laquelle la sécurité anti-surcharge se déclenche est au maximum de 200 N, notamment au maximum de 150 N, de préférence au maximum de 100 N.

15. Épandeur selon l'une quelconque des revendications 8 à 14, **caractérisé en ce que** le dispositif de commande est relié de façon active à un dispositif de détermination de position de l'unité d'entraînement électromotorisée (6) pour détecter la position réelle du cache (3) et régler si nécessaire a posteriori la position théorique, le dispositif de détermination de position comportant notamment :
- au moins un capteur d'angle pouvant détecter la position angulaire d'au moins un arbre (8, 12a, 14a, 17) de l'unité d'entraînement motorisée (6) ; et/ou
- au moins un capteur de vitesse de rotation détectant la vitesse de rotation d'au moins un arbre (8, 12a, 14a, 17) de l'unité d'entraînement motorisée (6).
